# EUROPEAN PATENT SPECIFICATION

(11) **EP 4 064 095 B1**
(45) Date of publication and mention of the grant of the patent: **29.10.2025**
(21) Application number: 22163117.9
(22) Date of filing: 19.03.2022
(51) Int. Cl.: H04N 1/32, G06F 21/62, G06Q 50/26, G06T 1/00, G06F 21/64

(54) **ENCODING, DECODING AND INTEGRITY VALIDATION SYSTEMS FOR A SECURITY DOCUMENT WITH A STEGANOGRAPHY-ENCODED IMAGE AND METHODS, SECURITY DOCUMENT, COMPUTING DEVICES, COMPUTER PROGRAMS AND ASSOCIATED COMPUTER-READABLE DATA CARRIER**
CODIERUNGS-, DECODIERUNGS- UND INTEGRITÄTSPRÜFUNGSSYSTEME FÜR EIN SICHERHEITSDOKUMENT MIT EINEM FÜR STEGANOGRAPHISCH CODIERTEN BILD UND VERFAHREN, SICHERHEITSDOKUMENT, COMPUTERVORRICHTUNGEN, COMPUTERPROGRAMME UND ZUGEHÖRIGER COMPUTERLESBARER DATENTRÄGER
SYSTÈMES DE CODAGE, DE DÉCODAGE ET DE VALIDATION D'INTÉGRITÉ POUR UN DOCUMENT DE SÉCURITÉ AVEC UNE IMAGE CODÉE PAR STÉGANOGRAPHIE ET PROCÉDÉS, DOCUMENT DE SÉCURITÉ, DISPOSITIFS INFORMATIQUES, PROGRAMMES INFORMATIQUES ET SUPPORT DE DONNÉES LISIBLE PAR ORDINATEUR ASSOCIÉ

(30) Priority: 23.03.2021 PT 2021117136
(43) Date of publication of application: 28.09.2022
(73) Proprietor: INCM - Imprensa Nacional-Casa da Moeda, S.A., 1000-042 Lisboa (PT); Universidade de Coimbra, 3004-531 Coimbra (PT)
(72) Inventor: GONÇALVES, NUNO MIGUEL MENDONÇA DA SILVA, 3000-046 COIMBRA (PT); SHADMAND, FARHAD, 3030-324 COIMBRA (PT)
(74) Representative: Monteiro Alves, Inês

(56) References cited:
- KR-B1- 100 459 922
- US-B1- 6 385 329
- MATTHEW TANCIK ET AL: "StegaStamp: Invisible Hyperlinks in Physical Photographs", ARXIV.ORG, CORNELL UNIVERSITY LIBRARY, 201 OLIN LIBRARY CORNELL UNIVERSITY ITHACA, NY 14853, 10 April 2019 (2019-04-10), XP081629714

## Description

### TECHNICAL FIELD

This invention is encompassed by the steganography area, particularly printer-proof steganography systems and methods, and capturing images through a, known in English, as printer-proof steganography.

### BACKGROUND ART

The integrity of facial images on security documents, such as civil identification and travel documents, namely national identity cards and passports, is often undermined by forgeries of the respective documents. Security documents, which are encompassed by the scope of this invention, may be identified as Identification Documents and Machine-Readable Travel Documents (ID-MRTD).

Due to its characteristics, individual facial images are acknowledged worldwide as a primary form of personal identification, constituting one of the main biometric elements, becoming increasingly common and more widely used for this purpose.

The facial image is therefore also rated as one of the most counterfeited and attacked security elements in civil and travel identification documents. One of the current ways to ensure the integrity of the facial images on these documents is through altering the image in order to encode hidden information in it, for the purpose of providing this information to integrity verification systems, either manual or automatic, cross-checking the information hidden in the image and decoded or obtained during verification with the expected information for the context within which the image is inserted. An example of this security mechanism is encoding the related passport number in the image of a person's face on their passport. It will then be easy for a verification system to cross-check the content hidden in the image with the content in the context of that image, thus making a decision on the integrity of both the photograph and the document.

In related contexts, the need for document verification extends to elements other than the face of the person, for example, the design elements printed on the card and that are common to all cards. It is then common to confirm the integrity of the supporting document itself by analyzing the images on it.

Within the context of this invention, namely in the field of concealing information encoded into an image, steganography is a technique for concealing the existence of private information in supporting data. Thus, the simple analysis or visualization of the supporting data is not sufficient to reveal either the existence of hidden information or to decode it. From the typological standpoint, the information to be concealed may be alphanumeric, binary or matrix (image), and the supporting data may also be alphanumeric, binary or matrix (image).

Consequently, steganography is a very common technique for concealing information in images, in order to disguise the existence of concealed data. The main idea behind steganography is to integrate the information to be hidden into the visual base information, necessarily forcing a loss of information from the latter, in order to accommodate the information from the former. The success of a steganography method lies in its ability to maintain as many of the visual properties of the base image as possible, keeping the loss of information as low as possible.

The South-Korean patent KR100459922B1 of Han Seok Gi et al., entitled "Digital image watermarking using region segmentation", reveals a method to insert a digital watermarking in a face photograph, namely in an area of high significance, wherein it is still possible to recover the digital watermarking inserted, even if the original digital image was segmented and a certain segmented region was combined with another image without permission.

The North-American patent US6385329B1 of Ravi K. Sharma et al., entitled "Wavelet domain watermarks" describes a method for embedding digital watermarks in multimedia content such as images and video. The technique uses wavelet transformation to convert the multimedia content into the frequency domain, where the watermark is added to the coefficients of the high-frequency sub-bands. The watermark can be designed to be imperceptible to the human eye or ear, but can still be detected and decoded using a specific algorithm. The watermark can be used for a variety of applications, including copyright protection, content authentication, and tracking.

US 6 385 329 B1 discloses further prior art.

### TECHNICAL PROBLEMS

The simplest and most primitive steganography method consists of replacing the least significant bit of the pixels in an image with one bit of information to be hidden. In this case, hidden information is the concatenation of all the least significant bits in the final image. This simple method has very little impact on the perception of the base image in the final image, because very little information is lost or destroyed, corresponding in general terms to a small reduction in the resolution of the real image and an alteration to some high frequency components, with little impact on the overall perception of the image. Despite this simplicity for encoding and decoding the image, this method does not offer high security for protecting hidden data; above all, it is not resistant to noise or some common image manipulations, such as compression (for example, in the JPEG format, with this acronym, from the English name of the Joint Photographic Experts Group, which is the group responsible for the JPEG standard.

There are dozens of more sophisticated steganography methods that allow information to be hidden, protecting it more securely.

However, the known steganography methods are not resistant to transmitting the information over a physical channel, retaining their properties only over digital channels, usually lossless. In fact, when there is a change from digital to physical format (this process is called transduction), and then a reversal to digital format, there is generally a significant loss of information that does not preserve the information hidden by the steganography method.

The most common digital-physical transduction methods are those performed by transduction devices, such as scanners, cameras, artificial retinas, printers and displays. Image transduction is often handled through pixel processing, considering that an image has an optical representation that can be sensed directly or indirectly by optical signals, and data representation based on electronic signals, such as voltage, electric current, or electric charge, in either analog or digital form. A pixel can thus be represented optically or electronically.

Image printing can be handled through any type of printing on any physical support, including paper; polymers, such as polycarbonate and polyvinyl chloride; metal sheets; resins; varnishes; tapes; holographic materials, or any other physical support. For screen visualization, several types of electronic equipment can also be used, including cathode ray tubes (CRT), liquid crystal displays (LCD), liquid crystals, light-emitting diode displays (LED) and all other related or derived technologies. On the other hand, for the physical-digital transduction process, the image is captured by optical devices, namely photographic or video cameras, using any type of vision technology.

Thus, a digital image retrieved from a printed image on physical media and that has been encoded by a common steganography process, does not preserve the hidden information, which has been totally or largely destroyed.

Additionally, it is important to note that although the capture of the image printed or displayed on a screen can be handled by any vision device, it is of particular interest that this capture can be undertaken by ubiquitous mobile devices, especially personal cell phones like smartphones, as the integrity of ID-MRTD documents can thus be verified by law enforcement agents or even citizens at any time, and not only through portals or fixed devices.

The fact that the solution can be effectively used by ubiquitous mobile devices raises two additional challenges for the technical problem to be solved. On the one hand, the mathematical and formal mechanisms for solving the problem must be based on algorithms whose computational cost is affordable on mobile devices, producing a decision judgment on the integrity of a document in an acceptable timeframe, preferably less than one second, but acceptable up to a few seconds. On the other hand, for the practical application of a technology that proposes to solve the problems of the state of the art to be effective, it is necessary that the document integrity validation can be performed in a mode disconnected from a communication network, meaning in an offline mode and without necessarily having to resort to remote central systems, avoiding the service being unavailable due to lack of connectivity or connectivity that is compromised from a security standpoint

In any case, the contextualization of problems at the state of the art does not imply that there are no situations where the connection mode with a communication network is preferred, i.e., online mode, when the mobile device communicates with the remote central system.

In short, it is convenient for the technology to allow an Integrity Validation of security documents in offline and online modes, whose effective architecture is designed in function of the specific and material circumstances for which it is intended; it is also convenient that the system complies with all application security requirements that prevent the system from being hacked, regardless of the mode adopted, whether offline or online.

Thus, this invention is intended to solve the problem of encoding an image using steganography that is resistant to physical medium alterations or lossy physical transmission. For linguistic convenience, these methods may be referred to in the English language as printer-proof steganography, or the printer-proof steganography method.

### SOLUTION TO PROBLEMS

The invention is defined in the appended claims.

This invention is intended to solve problems at the state of the art through using adversarial generative network technology to generate encoded images that can be inserted into the security documents with hidden secret information, with minimal changes to the original images, while maintaining either system capacity to decode the hidden information after transmission to a physical medium, or the perceptive ability of human beings or automatic systems to recognize images in the security documents.

Also known as GANs in English, generative adversarial networks are neural networks whose architecture is based on two adversarial subnets, as in game theory: the generative network and the discriminative network. The purpose of the generative network is to create examples of images, namely artificial images, which resemble a type or style of initial images. In contrast, the discriminative network is designed to distinguish real images from artificially generated images. Thus, for the adversarial generative network to be able to generate highly realistic artificial images, it is thus necessary, as with any machine learning system, to train the network with a large number of examples. This architecture is then trained through a set of input images, a dataset in English, in such a way that the network parameters and weights are adjusted until the generative network is able to generate artificial images that the discriminative network cannot distinguish. At the end of the training phase, the adversarial generator generative network is then able to generate highly realistic artificial images that are easily perceived as real images by human beings.

For encoded image generation, the generative network is endowed with both encoding and decoding capabilities, in order to test the generative network's ability to create images with secret messages, whose information can later be successfully decoded.

Thus, a relevant technical contribution provided by this invention is related to the fact that the encoding system for a security document with a printer-proof steganography-encoded image (1) and the decoding and integrity validation system for a security document with a printer-proof steganography-encoded image (2) are trained to maintain the decoding resistance of the encoded information, in the presence of a very high number of physical and digital factors, such as distortion, error and loss of information. To this end, a training subsystem that includes a generative adversarial neural network (3) is included, which encompasses a generator generative adversarial neural network (6) and a discriminative generative adversarial neural network (7). Additionally, the generator generative adversarial neural network (6) comprises a physical transmission noise simulation module (18) in the encoding system (1) that will add noise to the input images during the neural networks training process, with training performed to generate and identify the concealed information under these conditions.

### ADVANTAGEOUS EFFECTS OF THE INVENTION

This invention presents ample versatility in the security document technical field, and may be used to be encoded and conceal information in a captured image, for example, a portrait of a person, whereby capturing the image encompasses a photograph, a photogram (a frame), a video, or correlated elements, subsequently printing out the encoded image on physical or electronic media, in order to produce a security document with a printer-proof steganography-encoded image (21).

This invention applies to image encoding in general, and is particularly useful for concealing a secret message in facial images, also called portraits, in the context of security documents with printer-proof steganography-encoded images (21) classified as civil identification documents and machine-readable travel documents (ID-MRTD). In this sense, such documents may be national identity cards or passports, among other documents. However, this invention is not limited to physical documents, but also includes digital documents or any personal identity model that uses facial biometrics as a security element for identity verification (1-to-1), and identification for personal authentication (1-to-many).

An important aspect of this invention refers to the overall purpose, which continues throughout the neural networks training phase, keeping the perception of the encoded image unchanged or with minimal, almost imperceptible, alterations in relation to the original image of a face, for example. Effectively, images encoded in compliance with this invention retain almost the same perceptual properties as the original images, with the process being optimized so that this alteration is as minor as possible, in order not to alter the facial recognition capacity of verification (1-to-1) and facial identification (1-to-many) systems. This feature is one of the main advantages of this invention, compared to what is known at the state of the art.

This invention also presents several advantages over the StegaStamp method, which will be mentioned on some occasions throughout the detailed description. A first advantage of this invention is related to its suitability for processing small images with the sizes specified for ID-MRTD document images. As will be seen later, in order to provide this function, image resizing noise is simulated, whereas StegaStamp functions acceptably only with larger image sizes, preventing its use with ID-MRTD documents. A second advantage of this invention is related to its suitability for images with overlapping translucent layers and holograms or other elements. In this sense, noise is simulated related to capturing images of faces (or others), with personalization performed under security layers that may be translucent, but cause distortion in the captured image. On the other hand, StegaStamp does not have this noise simulation, so it does not resist this strong distortion of the image to be validated. A third advantage of this invention is related to the preservation of the perception properties of a human face, by either human beings or automatic face recognition systems, with minimal changes to the facial structure, whereas StegaStamp alters human faces considerably, causing distortions that prevent its application to ID-MTD documents.

### BRIEF DESCRIPTION OF DRAWINGS

In order to foster an understanding of the principles related to the embodiments according to the embodiments of this invention, reference will be made to the embodiments illustrated in the Figures and the language used to describe them. In any case, it must be understood that there is no intention of limiting the scope of this invention to the content of the Figures. Any subsequent changes or modifications to the inventive characteristics illustrated herein and any further applications of the principles and embodiments of the illustrated invention that would normally occur to a person versed in the art in possession of this description, are considered to fall within the scope of the claimed invention.
Figure 1 - illustrates an embodiment of the encoding system for a security document with a printer-proof steganography-encoded image;
Figure 2 - illustrates an embodiment of the training subsystem that includes a generator generative adversarial neural network;
Figure 3 - illustrates an embodiment of the decoding and integrity validation system for a security document with a printer-proof steganography-encoded image.

### DESCRIPTION OF EMBODIMENTS

The present invention is defined by the claims. Any subject matter falling outside the scope of the claims is provided for information purposes only.

In a first aspect, this invention addresses an encoding system for a security document with a printer-proof steganography-encoded image (1) comprising:
a binary error correction and redundancy introduction encoding module (9) that is configured to convert a secret message (8) into a binary message to be encoded (10); and
a first facial detection alignment, cropping, and resizing module (12) that is configured to process and select a partial image to be encoded (13) from an entire image to be encoded (11); and
an encoding module (14) that is configured to encode the binary message to be encoded (10) into the partial image to be encoded (13), resulting in an encoded partial image (15); and
an image integration module (16) that is configured to integrate the encoded partial image (15) into the entire image to be encoded (11), resulting in an encoded entire image (17);
wherein the encoding system for a security document with a printer-proof steganography-encoded image (1) is trained by a training subsystem that includes a generative adversarial neural network (3), wherein said generative adversarial neural network (3) comprises a generator generative adversarial neural network (6) and a discriminative generative adversarial neural network (7); wherein
the generator generative adversarial neural network (6) is configured to process a training secret message (39) and a training image (40) through a training encoding module (41), a physical transmission noise simulation module (18), a captured image resizing module (25) and a training decoding module (42), resulting in an artificial image with a training encoded message (43); and the discriminative generative adversarial neural network (7) being configured to process the artificial image with a training encoded message (43) through a facial detection, alignment, and cropping training module (44) and a loss function calculation module (45), resulting in a retrieved secret message (46); wherein the training is performed through a plurality of processing steps for training secret messages (39) and training images (40), generating retrieved secret messages (46) until the loss function calculation module (45) calculates the efficiency as satisfactory in the retrieval of the secret message.

In a second aspect, this invention addresses a decoding and integrity validation system for a security document with a printer-proof steganography-encoded image (2), which is integrated with the encoding system for a security document with a printer-proof steganography-encoded image (1), as defined in the first aspect of the invention, and comprises:
a decoding subsystem (4) that includes a second facial detection, alignment, cropping and resizing module (27), a decoding module (29) and a binary error correction module with redundancy (31); and
an integrity validation subsystem (5) that includes a decoded message validation module (33) and a security document validity integration module (36);

wherein the second facial detection, alignment, cropping and resizing module (27) is configured to process and select a partial image to be validated (28) from an entire image to be validated (26);
wherein the decoding module (29) is configured to decode the partial image to be validated (28), resulting in a binary message to be validated (30);
wherein the binary error correction module with redundancy (31) is configured to convert the binary message to be validated (30) into a decoded message to be validated (32);
wherein the decoded message validation module (33) is configured to analyze whether the decoded message to be validated (32) is correct and conclusive;
wherein the security document validity integration module (36) is configured to analyze whether a correct secret message (34) confers authenticity on the security document to be validated (22) ; wherein
the security document integrity validation module (36) is configured to provide a binary response on the integrity of the document: a positive decision on security document authenticity (37) or a negative decision on security document authenticity (38); wherein the security document is considered authentic if the correct secret message (34) is validated and equal to an expected secret message.

In a third aspect, this invention addresses a computer-implemented method for encoding a security document with a printer-proof steganography-encoded image, wherein said method is run by the encoding system for a security document with a printer-proof steganography-encoded image (1), as defined in the first aspect of the invention, and comprises the following steps:
(a) conversion of a secret message (8) into a binary message to be encoded (10) through a binary error correction and redundancy introduction encoding module (9);
b) Processing and selection of a partial image to be encoded (13) from an entire image to be encoded (11) through a first facial detection alignment, cropping, and resizing module (12);
c) Encoding the binary message to be encoded (10) into the partial image to be encoded (13) through an encoding module (14), resulting in an encoded partial image (15);
d) Integration of the encoded partial image (15) into the entire image to be encoded (11) through an image integration module (16), resulting in an encoded entire image (17);
wherein the binary error correction and redundancy introduction encoding module (9), the first facial detection alignment, cropping, and resizing module (12), the encoding module (14) and the image integration module (16) are embodied in an encoding system for a security document with a printer-proof steganography-encoded image (1); wherein the encoding system for a security document with a printer-proof steganography-encoded image (1) is to be trained through a training subsystem that includes a generative adversarial neural network (3), which comprises a generator generative adversarial neural network (6) and a discriminative generative adversarial neural network (7); wherein
the training of the encoding system for a security document with a printer-proof steganography-encoded image (1) is handled by the generator generative adversarial neural network (6) processing a training secret message (39) and the training image (40) through the training encoding module (41), the physical transmission noise simulation module (18), the captured image resizing module (25) and the training decoding module (42), resulting in an artificial image with a training encoded message (43); and the discriminative generative adversarial neural network (7) processing the artificial image with the training encoded message (43) through the facial detection, alignment and cropping training module (44) and the loss function calculation module (45), resulting in a retrieved secret message (46); wherein the training is performed through a plurality of processing steps for training secret messages (39) and training images (40), generating retrieved secret messages (46) until the loss function calculation module (45) calculates the efficiency as satisfactory in the retrieval of the secret message.

In a fourth aspect, this invention addresses a computer-implemented method for the decoding and integrity validation of a security document with a printer-proof steganography-encoded image, wherein said method is run by the decoding and integrity validation system for a security document with a printer-proof steganography-encoded image (2), as defined in the second aspect of the invention, and comprises the following steps:
(a) Processing and selection of an entire image to be validated (26) through a second facial detection, alignment, cropping and resizing module (27), resulting in a partial image to be validated (28);
b) Decoding of the partial image to be validated (28) through a decoding module (29), resulting in a binary message to be validated (30);
c) Conversion of the binary message to be validated (30) into a decoded message to be validated (32) through a binary error correction module with redundancy (31);
(d) Analysis of the decoded message to be validated (32) by a decoded message validation module (33), resulting in the decision on whether the decoded message to be validated (32) is a correct secret message (34) or an incorrect secret message (35);
e) Analysis of the correct secret message (34) by a security document validity integration module (36), resulting in the decision on whether the security document to be validated (22) is genuine
   wherein
   the security document integrity validation module (36) provides a binary response on the integrity of the document: a positive decision on security document authenticity (37) or a negative decision on security document authenticity (38); wherein
   the security document is considered genuine if the correct secret message (34) is validated and equal to an expected secret message.

In a fifth aspect, this invention addresses a security document with a printer-proof steganography-encoded image (21), comprising at least one encoded entire image (17) physically transmitted on a physical support or on an electronic support and being prepared through the method defined according to the third aspect of the invention.

In a sixth aspect, this invention addresses a computing device comprising a means adapted to execute the steps of the method defined in accordance with the third aspect of the invention.

In a seventh aspect, this invention addresses a computing device comprising a means adapted to execute the steps of the method defined in accordance with the fourth aspect of the invention.

In an eighth aspect, this invention addresses a computer program comprising instructions which, when the computer program is executed by a computing device, as defined in the sixth aspect of the invention, cause the computing device to execute the steps of the method defined in the third aspect of the invention.

In a ninth aspect, this invention addresses a computer program comprising instructions which, when the computer program is executed by a computing device, as defined in the seventh aspect of the invention, cause the computing device to execute the steps of the method defined in the fourth aspect of the invention.

In a tenth aspect, this invention addresses a computer-readable data carrier having stored thereon the computer program, as defined in the eighth aspect of the invention.

In an eleventh aspect, this invention addresses a computer-readable data carrier having stored thereon the computer program, as defined in the ninth aspect of the invention.

### Encoding system for a security document with a printer-proof steganography-encoded image

From the standpoint of the encoding system for a security document with a printer-proof steganography-encoded image (1), it is possible to distinguish two phases of application for the technology encompassed by this invention: a training phase and a test phase. As in any machine learning system, the training phase precedes the test phase and is aimed at tuning the parameters of the test network using relatively large datasets, wherein the amount of training data required depends on the number of parameters and complexity of the networks to be trained.

After the training phase, the encoding system for a security document with a printer-proof steganography-encoded image (1) and the decoding and integrity validation system for a security document with a printer-proof steganography-encoded image (2) become operational in the testing phase. In terms of quality control, the role of the decoding and integrity validation system for a security document with a printer-proof steganography-encoded image (2) should also be highlighted, because after the production of a security document with a printer-proof steganography-encoded image (21), quality control is carried out based on the decoding steps, in order to ensure that the produced security document can in the future be effectively authenticated according to the method and decoding system of this invention. These encoding and decoding systems also use facial detection image alignment, and cropping modules, and binary error correction and redundancy introduction modules.

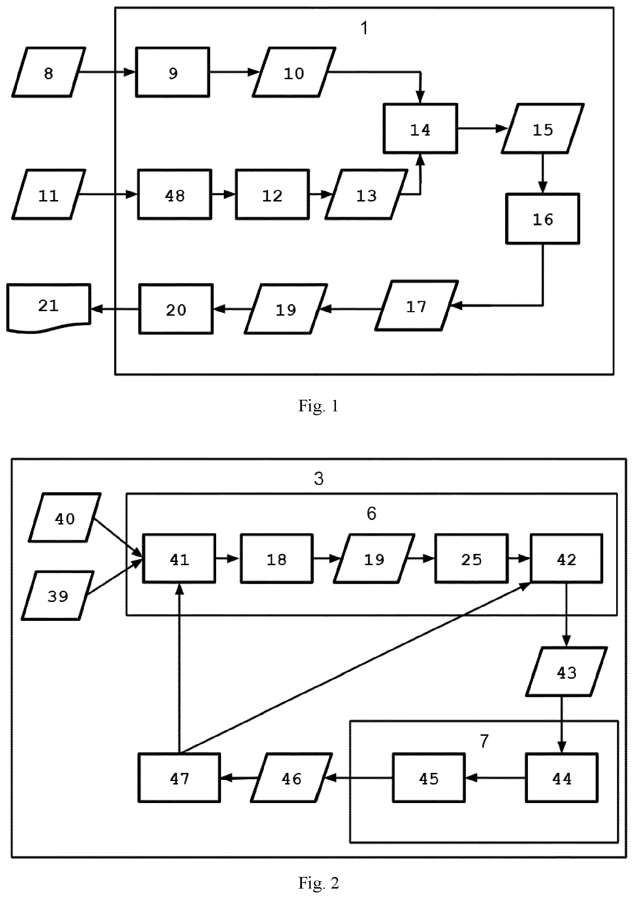

Figure 1 illustrates an embodiment of the encoding system for a security document with a printer-proof steganography-encoded image. In functional terms for an encoding system for a security document with a printer-proof steganography-encoded image (1), there is initially the input of an entire image to be encoded (11), for example, a facial image, and a secret message (8). In this invention model, the hidden information will be located in a specific part of the entire image to be encoded (11). The desired part of the entire image to be encoded (11) is then detected and cropped by a first facial detection alignment, cropping, and resizing module (12) that uses, for example, the BlazeFace models described in Valentin Bazarevsky, Yury Kartynnik, Andrey Vakunov, Karthik Raveendran, and Matthias Grundmann. Blazeface: Sub-Millisecond Neural Face Detection on Mobile GPUs. arXiv Preprint arXiv:1907.05047, 2019) or FaceNet, resulting in a partial image to be encoded (13). The first facial detection alignment, cropping, and resizing module (12) has the functionality of standardizing the sizes of the processed images to a certain size, compatible with the specifications required by the subsequent module. In the preferred embodiments of this invention, a first image pre-processing module (48) is inserted before the first facial detection alignment, cropping, and resizing module (12), to compensate the images in terms of lighting, for example, or in terms of color, size, structure, aspect ratio or some distortions (radial or otherwise).

In parallel, as shown in Figure 1, the secret message (8) is encoded by a binary error correction and redundancy introduction encoding module (9), using, for example, the Reed-Solomon algorithms, described in Daniel Bleichenbacher, Aggelos Kiayias, and Moti Yung. Decoding of Interleaved Reed Solomon Codes Over Noisy Data. pages 97-108, 2003; and in Stephen B Wicker and Vijay K Bhargava. An Introduction to Reed-Solomon Codes. Reed-Solomon Codes and their Applications, pages 1-16, 1994; or Bose-Chaudhuri-Hocquenghem (BCH), described in George Forney. On decoding BCH codes. IEEE Transactions on Information Theory, 11 (4):549-557, 1965. The introduction of redundancy in the information is vital for enhancing the success rate of the decoding method, performed by the decoding and integrity validation system for a security document with a printer-proof steganography-encoded image (2).

Next, encoding the binary message to be encoded (10) into the partial image to be encoded (13) is performed using an encoding module (14), resulting in an encoded partial image (15) with a hidden secret message. The subsequent step involves the integration of the encoded partial image (15) into the entire image to be encoded (11) through an image integration module (16), resulting in an encoded entire image (17). This integration can be handled, for example, through substituting the original portion of the entire image by the portion of the encoded partial image.

As shown in Figure 1, in the preferred embodiments of this invention, the encoding system for a security document with a printer-proof steganography-encoded image (1) comprises a physical transmission module for an entire encoded image in a security document (20) to a security document with a printer-proof steganography-encoded image (21). Therefore, the computer-implemented method for encoding a security document with a printer-proof steganography-encoded image includes a subsequent additional step, which includes the physical transmission of the encoded entire image (17) to a security document with a printer-proof steganography-encoded image (21), with this step performed by the physical transmission module for an encoded entire image (20).

The first facial detection alignment, cropping, and resizing module (12) contributes to a robust document image verification process by concealing a secret message in the face image or portrait. Thus, a face detection model is needed to initially identify the portion of the image where the person's face is present, then selecting the region of interest on the face in order to discover the part of the face where the secret message is hidden. It is important to note that the face detection model must reveal exactly the part of the face with the encoded information. For this purpose, this invention applies any method at the state of the art, particularly cascade classifiers such as HAAR or LBP, BlazeFace, MobileNets V2, Float 32, MobileNets V2 int8, SSD int8 MTCNN, CASCATA LBP (OpenCV) or PRnet.

OpenCV is an example of a publicly open application that has a significant set of tools to detect faces and special features in images.

Exhaustive tests lead to the conclusion that face detection methods based on deep learning are more suitable, together with the need to consider that the main focus for using these systems is on mobile devices. It is thus important to take into account the computational capacity required by the methods. Thus, the BlazeFace and Mobilenet V1/V2 methods are significantly faster and more accurate deep learning architectures for modern mobile devices.

Furthermore, the PRnet method provides a complete solution for face detection and face pose analysis that increases detection accuracy under varying poses and occlusions. With no loss of generality, in the preferred embodiments of this invention, PRnet is the best performing method for the purpose of this invention. In any case, any facial detection alignment and cropping module developed in the future with more sophisticated methods, may be used within the scope of this invention.

The binary error correction and redundancy introduction encoding module (9) encodes a message by using the BCH or Reed-Solomon methods, for example, with the additional function of enhanced stability and greater decoding accuracy. This module will allow the decoding module (29) to detect and correct, when possible, errors in the message from the redundancy of the information presented to the encoding module (14). Consequently, the ratio of images that can be successfully decoded increases dramatically. Although the exact choice of error correction and redundancy methods is not encompassed by this invention, we believe that the most suitable methods currently known at the state of the art are BCH codes and Reed-Solomon codes.

The encoding module (14) is the core of the encoding system for a security document with a printer-proof steganography-encoded image (1). The main purpose of the encoding module (14) is to generate a realistic image that optimizes two competing goals: on the one hand, the ability of the decoding module (29) to extract the secret message from the encoded image and, on the other, the preservation of the image structure and perception properties of the image by human beings and automatic image recognition systems.

The architecture of the encoding system for a security document with a printer-proof steganography-encoded image (1) is based on the well-known U-shaped network structure, also called UNets, with the removal of the pooling layers to maintain the information in the secret messages, which may be lost during the training phase. So, for example, the encoding system for a security document with a printer-proof steganography-encoded image (1) receives an aligned face image as input, with a secret message (8), generating an encoded image of substantially the same size. It should be noted that, for the purpose of training the encoding network, the training secret message is random. Preferably, the secret binary message can be transformed to match the size of the encoder input.

As the encoding module (14) has no pooling layers, the architecture must be designed carefully, manually matching convolution parameters in order to avoid layer binding errors.

In the preferred embodiments of this invention, the entire image to be encoded (11) is a facial portrait, and the security document with a printer-proof steganography-encoded image (21) is selected from the group consisting of a personal identification document and a personal machine-readable travel document.

Preferably, the computer-implemented method for encoding a security document with a printer-proof steganography-encoded image, in compliance with the third aspect of the invention, is handled by encoding system for a security document with a printer-proof steganography-encoded image (1), as defined in the first aspect of this invention.

### Training subsystem including a generative adversarial neural network

The encoding system for a security document with a printer-proof steganography-encoded image (1) is trained by a training subsystem that includes a generative adversarial neural network (3) that it comprises a generator generative adversarial neural network (6) and a discriminative generative adversarial neural network (7). The generator generative adversarial neural network (6) and discriminative generative adversarial neural network (7) run throughout the training phase, in order to hide and read secret messages in images, such as facial images. On the other hand, several noise simulation layers are added between the encoding and decoding modules, in order to create realistic images during training, with particular emphasis on noises that simulate the transmission by physical means, such as printing or transmission to a screen.

A physical transmission noise simulation module (18) is inserted into the generator generative adversarial neural network (6) for the purpose of simulating noise that occurs during physical transmission of an encoded image, namely printing or displaying on a screen, and the subsequent image capture by digital or analog cameras with subsequent digitization. Thus, various types of noise are applied to the training images (40), resulting in training images with simulated noise (19), whereby iterative training contributes to the robustness of the method for verifying the authenticity of a security document to be validated in the test phase of processing by the decoding and integrity validation system for a security document with a printer-proof steganography-encoded image (2).

The methods constituting the state of the art in the field of noise simulation are the HiDDeN methods, described in: ZHU, Jiren, et al. HiDDen: Hiding Data with Deep Networks. In: Proceedings of the European Conference on Computer Vision (ECCV). 2018. pp. 657-672; and StegaStamp, described in: Matthew Tancik, Ben Mildenhall, Ren Ng Invisible Hyperlinks in Physical Photographs; Proceedings of the IEEE/CVF Conference on Computer Vision and Pattern Recognition (CVPR), 2020, pp. 2117-2126. The encoding system for a security document with a printer-proof steganography-encoded image (1) addressed by this invention encompasses a set of the same noises as those applied by these methods, such as geometric distortion, including perspective distortion; optical and motion blur; camera noise; color manipulation and image compression in the JPEG format, for example. Perspective distortion may be simulated by random homography that simulates the effect of the camera not being precisely aligned with the plane of the encoded image. Optical blur and motion blur can result from camera movement and inaccurate autofocus, which is very common in mobile devices. To simulate motion blur, a linear blur core is used, with a random angle and width between 3 and 7 pixels. The camera noise, which includes photonic noise, dark noise and camera system shot noise, are well described and documented by the above-mentioned works constituting the state of the art. Color manipulation, which is a noise that results both from printers and displays, has a limited range compared to the full RGB color range and includes changes in tonality, saturation, brightness and contrast. This invention also encompasses noise related to image compression, for example, in the JPEG format, which affects the image when it is stored in a lossy format, such as JPEG.

With regard to physical transmission noise in the context of ID-MRTD documents, this invention also addresses overlay noise due to translucent overlay material, which is pertinent when a transparent or translucent hologram or other layered material is placed over security document images, causing image perception degradation, such as in a facial image. Facial images are customized in security documents in layers below layers above them, as these documents are constructed in layers, some with security elements, as is the case with transparent holograms. Thus, the image captured of a face in such a document always has part of the image obstructed by semi-transparent or translucent elements.

All these noises are suitable for integration between the generator generative adversarial neural network (6) and the discriminative generative adversarial neural network (7) in the training phase, particularly for introducing noise between the training encoding module (41) and the training decoding module (42) in the generator generative adversarial neural network (6). All added noise components have scaled r parameters that govern the intensity of the distortion, for network training purposes.

However, these noise components in the above-mentioned state-of-the-art models are not sufficient to meet one of the main objectives of the problem to be solved by this invention, namely the need to keep the facial structure of the encoded image unchanged, or with minimal and almost unnoticeable changes; in other words, keeping the facial perception capabilities of the image by a human being or by a facial recognition system almost unchanged, either by verification (1-to-1) or by identification (1-to-many). To this end, a captured image resizing module (25) is inserted into the generator generative adversarial neural network (6), whereby the captured image resizing module (25) introduces noise by resizing facial images to smaller images, which consequently drastically reduces the resolution of the face image and therefore allows the network to be trained so that decoding is possible on smaller face images.

The captured image resizing module (25) contributes to the decoding and integrity validation system for a security document with a printer-proof steganography-encoded image (2) being able to read a message from a small face image printed on documents. Image size is a key issue for this invention, as smaller facial image size, for example, makes it harder to successfully encode and decode a secret message. Although there are ID-MRTD documents with numerous facial image sizes, the state of the art is defined by a few of the most influential international institutions and is generally governed by effective or *de facto* international standards. Some of the most important documents for different image sizes are the ICAO 9303 document and the ISO IEC 19794:5 international standard.

Although there is no specific size for which it is pertinent to solve the problem addressed by this invention, practice indicates that images in security documents to be validated (22) usually have a width in a range of about 2 centimeters to about 4 centimeters.

Consequently, an additional technical contribution presented by this invention relates to the inclusion of a captured image resizing module (25), whose purpose is to resize inputted encoded images to sizes appropriate for ID-MRTD documents. This image transformation constitutes an additional noise level, whereby training substantially improves the ability of the decoding module (29) to successfully retrieve secret messages from smaller portraits.

Still regarding the discriminative generative adversarial neural network (7) that includes the loss function calculation module (45), this consists of a set of components that allow optimizing the parameters of the various networks during training, using standard loss components for this type of networks and, additionally, a loss function whose effect is to preserve the appearance of the encoded image during training.

The discriminative generative adversarial neural network (7) includes a facial detection, alignment and cropping training module (44) a CNN and a Simple Dense Layer, which is a Fast Forward Network. The facial detection, alignment and cropping training module (44) receives the encoded image and crops the appropriate portion for input into the loss function calculation module (45).

In the preferred embodiments, a discriminative generative adversarial neural network (7) is comprised of a Learning Perceptual Image Patch Similarity (LPIPLS) perceptual loss function and a critical loss function for encoded images, a dense layer and a binary cross entropy loss function for decoded messages and a face embedding component. The LPIPLS perceptual loss function is described in: Zhang, R., Isola, P., Efros, A. A., Shechtman, E, & Wang, O. (2018). The Unreasonable Effectiveness of Deep Features as a Perceptual Metric. In Proceedings of the IEEE Conference on Computer Vision and Pattern Recognition (pp. 586-595).

In the preferred embodiments, the loss function calculation module (45) includes the LPIPLS perceptual loss function and the face embedding component.

With regard to the LPIPLS perceptual loss function, its effectiveness has been demonstrated in models at the state of the art, such as in the StegaStamp model. In this invention, it is less used as a perceptual loss function.

For the face embedding component, as one of the main purposes of the method addressed by this invention is to preserve the facial structure and its high-level representation, the loss function was modified to include the similarity function that is estimated by the FaceNet model output. The FaceNet model uses the Inception Resnet V1 architecture that was trained with the VGG2 dataset, and is described in: Florian Schroff, Dmitry Kalenichenko, James Philbin; FaceNet: A Unified Embedding for Face Recognition and Clustering; Proceedings of the IEEE Conference on Computer Vision and Pattern Recognition (CVPR), 2015, pp. 815-823. This model receives a 160x160 pixel RGB face image and provides output consisting of a face feature vector with 128 day mentions. The Euclidean distance between the two feature sets expresses the dissimilarity between the two source images. The model in this invention thus calculates the Euclidean distance to minimize the facial characteristics between the original and encoded images during the training process.

Other loss terms are added to both the particularly preferred loss function terms, namely the LPIPLS perceptual loss function and the face embedding component, which are used in the above-mentioned models constituting the state of the art, specifically the StegaStamp and HiDDen models.

The loss function calculation module (45) thus includes at least one of the following components: LPIPS perceptual loss function - L_P; FaceNet loss function - L_F, which refers to an arbitrary biometric recognition system that measures the proximity of two face templates by Euclidean distance; Wasserstein loss function - L_W, which is used as a perceptual loss for the encoder/decoder pipeline; residual regularization loss function - L_R; and cross entropy loss function - L_B, which trains the decoder network to retrieve the message.

Thus, the training phase comprises the main modules of the encoding system for a security document with a printer-proof steganography-encoded image (1) and the decoding and integrity validation system for a security document with a printer-proof steganography-encoded image (2), and will allow the parameter tuning for the encoding and decoding modules used in the testing phase.

In the particularly preferred embodiments of this invention, when running the training subsystem that includes a generative adversarial neural network (3), the overall loss function is then the weighted sum of five loss terms, i.e., given by the equation (Loss = F*L_F + P*L_P + W*L_W + R*L_R + B*L_B), where F, P, W, R and B are the scalar weights of the components of the loss function. In the initial training phase, F, P, W and R are initially set to zero and B is set to the value 0.01, until the decoder achieves high accuracy with these weights. In experiments performed with this invention, it usually takes about 500 to about 700 steps to achieve high accuracy. After high accuracy is achieved, these weights can be increased linearly with each step. With this, it is possible to slowly improve the effectiveness of the overall loss function by increasing these scalar coefficients.

As shown in Figure 2, the generator generative adversarial neural network (6) is configured to process a training secret message (39) and a training image (40) through a training encoding module (41), a physical transmission noise simulation module (18), a captured image resizing module (25) and a training decoding module (42), resulting in an artificial image with a training encoded message (43). Then and in parallel, the discriminative generative adversarial neural network (7) is configured to process the artificial image with a training encoded message (43) through a facial detection, alignment and cropping training module (44) and a loss function calculation module (45), resulting in a retrieved secret message (46); wherein training is performed through a plurality of steps for processing training secret messages (39) and training images (40) and the generation of retrieved secret messages (46), whereby the generator generative adversarial neural network (6) training process takes place through an error propagation process, calculated by a loss function calculation module (45), and an adjustment process for the generative network parameters performed by a generative network parameters adjustment module (47), namely the operating parameters for the training encoding module (41) and the training decoding module (42).

In the transition from the training phase by the generative adversarial neural network to the test phase of the encoding system for a security document with a printer-proof steganography-encoded image (1) and the decoding and integrity validation system for a security document with a printer-proof steganography-encoded image (2), the encoding module (14) is based on the training encoding module (41); the decoding module (29) is based on the training decoding module (42); and the first facial detection alignment, cropping, and resizing module (12) and the second facial detection, alignment, cropping and resizing module (27) are based on the facial detection, alignment and cropping training module (44). In the particularly preferred embodiments, the first facial detection, alignment, cropping, and resizing module (12) and the second facial detection, alignment, cropping and resizing module (27) can be essentially the same run module.

### Decoding and integrity validation system for a security document with a printer-proof steganography-encoded image

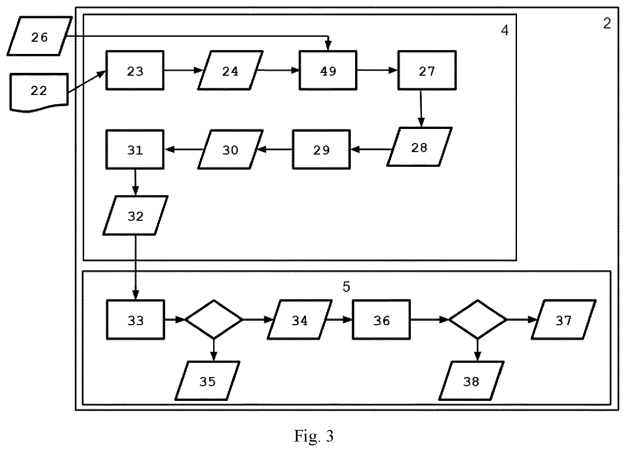

In order to verify that a security document to be validated (22) is genuine and, as shown in Figure 3, a decoding and integrity validation system for a security document with a printer-proof steganography-encoded image (2) operates through an initial step of processing and selection of an entire image to be validated (26) by a second facial detection, alignment, cropping and resizing module (27), resulting in a partial image to be validated (28). The second facial detection, alignment, cropping and resizing module (27) is responsible, for example, for detecting the main face in an entire image to be validated (26) and subsequently detects the encoded part of the face image. Additionally, the second facial detection, alignment, cropping and resizing module (27) has the function of standardizing the sizes of the processed images to a certain size, compatible with the specifications established by the subsequent module.

As shown in Figure 3, in the preferred embodiments of this invention, a second image pre-processing module (49) is inserted before the second facial detection, alignment, cropping and resizing module (27) in order to compensate the images in terms of lighting, for example, or in terms of color, size, structure, aspect ratio or some distortions (radial or otherwise).

In other preferred embodiments of the invention, the captured entire image to be validated (24) is obtained from the capture of a security image included in the security document to be validated (22) through a digital capture module of an entire image included in at least one security document to be validated (23) that is embedded in a digital camera or forms part of the integration between an analog camera whose image is then digitized by a digitization device configured for this purpose. Even more preferably, the captured entire image to be validated (24) may be a facial portrait and the security document to be validated (22) should be selected from the group consisting of a personal identification document and a personal machine-readable travel document.

Thus, the second image pre-processing module (49) may receive for processing either an entire image to be validated (26), or a captured entire image to be validated (24), considered as equivalent in the context of this invention.

Returning to the illustration in Figure 3, the next step includes decoding the partial image to be validated (28) through a decoding module (29), resulting in a binary message to be validated (30). The next step includes converting the binary message to be validated (30) into a decoded message to be validated (32), composed of a number or string of characters, using a binary error correction module with redundancy (31).

For the decoding module (29), a Convolutional Neural Network (CNN) is used, together with a Special Transformer Network (STN) preferably based on the StegaStamp and HiDDeN models. The STN network helps isolate the appropriate region and normalize its scale, which can simplify the task of decoding the information hidden by steganography and lead to better performances. The network removes the spatially non-variant part of the encoded image by applying a similar learned transformation, followed by an interpolation operation. In the preferred embodiments of the invention, the STN network is placed before the CNN network.

Still in the context of Figure 3, after running through the decoding subsystem (4), the document to be validated is processed by the integrity validation subsystem (5), wherein a first step of analysis of the decoded message to be validated (32) is performed by a decoded message validation module (33), resulting in a decision on whether the decoded message to be validated (32) is a correct secret message (34) or an incorrect secret message (35).

This step is performed through validation algorithms, usually a hash function or a verification algorithm using a checksum. At the end of this module, the integrity validation subsystem (5) outputs the retrieval of a correct secret message (34) or the information that the decoding was inconclusive, in order to retrieve an incorrect secret message (35). Next, the correct secret message (34) is analyzed by the security document integrity validation module (36), leading to the decision on whether the security document to be validated (22) is genuine.

In the particularly preferred embodiments of this invention, the decoding and integrity validation system for a security document with a printer-proof steganography-encoded image (2) features a decoding module (29) that includes at least a special transformation network and at least a convolutional neural network.

The decoding and integrity validation system for a security document with a printer-proof steganography-encoded image (2) is integrated with the encoding system for a security document with a printer-proof steganography-encoded image (1).

Preferably, the computer-implemented method for the decoding and integrity validation of a security document with a printer-proof steganography-encoded image, according to the fourth aspect of the invention, is performed by the decoding and integrity validation system for a security document with a printer-proof steganography-encoded image (2), according to the second aspect of the invention.

The decoded message validation module (33) is intended to analyze the information extracted or retrieved by the decoding module (29) from a partial image to be validated (28), checking compliance with a set of required validation rules. The decoded message to be validated (32) enters the decoded message validation module (33) after any errors in the decoding have been corrected, using error correction methods, such as the BCH or Reed-Solomon methods.

The decoded message validation module (33) then applies a verification system to the decoded message to be validated (32), producing a binary response after the verification is completed: correct secret message (34) or incorrect secret message (35). Although the specific message validation method does not fall within the scope of this invention, some of the main methods suitable for this module include the use of a cryptography hash function that, when applied to a part of the message, generates information that should match the remaining part of the message, transmitted simultaneously; or also the use of verification digits, referred to as check digits or checksums, which apply a set of calculations applied to a part of the message and whose outcome should match the remaining part of the message, transmitted simultaneously.

Should the decoded message validation module (33) produce an incorrect secret message (35), the captured entire image to be validated (24) is rated as inconclusive, as the message incorrectness might in this case do to a transmission error, meaning that the physical transmission caused a severe degradation in the image, whereby it was not possible to retrieve the message completely.

On the other hand, should the decoded message validation module (33) produce a correct secret message (34), the retrieved message is made available at the output of this module, for validation by the security document validity integration module (36).

The security document validity integration module (36) is intended to verify that the correct secret message (34) is the expected secret message and ensures the integrity of the security document, for example, an ID-MRTD. It is usual, although not mandatory, that the message is, or at least contains, the ID-MRTD document number and possibly some other personal data of the document holder. In these cases, the identity validation process compares the retrieved and validated message with the document number and the other information contained in the secret message.

The resulting security document validity integration module (36) is a binary response on the integrity of the document: a positive decision on security document authenticity (37) or a negative decision on security document authenticity (38). The security document is considered genuine (valid) if the correct secret message (34) is validated and equal to the expected message constructed by the validation system. In all other cases, the document is considered not genuine (invalid).

In an alternative possibility of this invention, part of the information needed for integrity decisions is stored on a remote secure database. In these cases, the information retrieved and validated from the correct secret message (34), possibly supplemented by additional information contained in the document image or entered directly into the validation equipment, which is used to access a remote secure database where the decision will be made. The information received by the remote system and the information stored in that system and unlocked will then be submitted to the security document validity integration module (36), in order to make a decision on the integrity of the document. This binary decision is sent back to the validation equipment.

For this remote alternative, the security document integrity validation module (36) may produce an inconclusive decision, in situations where it is not possible to connect to the remote system, or there may be difficulties with connectivity and security.

As used in this description, the expressions "about" and "approximately" refer to a range of values of plus or minus 10% of the specified number.

As used throughout this patent application, the term "or" is used in the inclusive sense rather than the exclusive sense, unless the exclusive sense is clearly defined in a specific situation. In this context, a phrase such as "X uses A or B" should be interpreted as including all relevant inclusive combinations, for example, "X uses A", "X uses B" and "X uses A and B".

As used throughout this patent application, the indefinite article "one" should generally be interpreted as "one or more", unless the singular meaning is clearly defined in a specific situation.

As presented in this description, example-related terms should be interpreted for the purpose of illustrating an example of something, rather than for indicating a preference.

As used in this description, the expression "substantially" means that the actual value is within about 10% of the desired value, variable or related limit, particularly within about 5% of the desired value, variable or related limit or particularly within about 1% of the desired value, variable or related limit.

The subject matter described above is provided as an illustration of this invention and should not be construed in a manner that limits it. The terminology used for the purpose of describing specific embodiments of this invention should not be interpreted as limits on the invention.

When used in the description, the definite and indefinite articles, in their singular form, are intended to be interpreted to include the plural forms as well, unless the context of the description explicitly indicates otherwise. It shall be understood that the terms "comprise" and "include", when used in this description, specify the presence of the related features, elements, components, steps and operations, but do not exclude the possibility of other features, elements, components, steps and operations also being encompassed thereby.

All changes, provided that they do not modify the essential characteristics of the following Claims, are to be considered as falling within the scope of the protection sought for this invention.

### LIST OF REFERENCES

1. An encoding system for a security document with a printer-proof steganography-encoded image
2. A decoding and integrity validation system for a security document with a printer-proof steganography-encoded image
3. A training subsystem that includes a generative adversarial neural network
4. A decoding subsystem
5 An integrity validation subsystem
6. A generator generative adversarial neural network
7. A discriminative generative adversarial neural network
8. A secret message
9. A binary error correction and redundancy introduction encoding module
10. A binary message to be encoded
11. An entire image to be encoded
12. A first facial detection alignment, cropping, and resizing module
13. A partial image to be encoded
14. An encoding module
15. An encoded partial image
16. An image integration module
17. An encoded entire image
18. A physical transmission noise simulation module
19. A training image with simulated noise
20. A physical transmission module for an entire encoded image in a security document
21. A security document with a printer-proof steganography-encoded image
22. A security document to be validated
23. A digital capture module of an entire image included in a security document to be validated
24. A captured entire image to be validated
25. A captured image resizing module
26. An entire image to be validated
27. A second facial detection alignment, cropping, and resizing module
28. A partial image to be validated
29. A decoding module
30. A binary message to be validated
31. A binary error correction module with redundancy
32. A decoded message to be validated
33. A decoded message validation module
34. A correct secret message
35. An incorrect secret message
36. A security document integrity validation module
37. A positive decision on security document authenticity
38. A negative decision on security document authenticity
39. A training secret message
40. A training image
41. A training encoding module
42. A training decoding module
43. An artificial image with a training encoded message
44. A facial detection, alignment, and cropping training module
45. A loss function calculation module
46. A retrieved secret message
47. A generative network parameter adjustment module
48. A first image preprocessing module
49. A second image preprocessing module

### LIST OF CITATIONS

Valentin Bazarevsky, Yury Kartynnik, Andrey Vakunov, Karthik Raveendran, and Matthias Grundmann. Blazeface: Sub-Millisecond Neural Face Detection on Mobile GPUs. arXiv preprint arXiv:1907.05047, 2019;
Daniel Bleichenbacher, Aggelos Kiayias, and Moti Yung. Encoding of Interleaved Reed Solomon Codes over Noisy Data. pages 97-108, 2003;
Stephen B Wicker and Vijay K Bhargava. An Introduction to Reed-Solomon Codes. Reed-Solomon Codes and Their Applications, pages 1-16, 1994;
George Forney. On Decoding BCH Codes. IEEE Transactions on Information Theory, 11 (4):549-557, 1965;
ZHU, Jiren, et al. HiDDen: Hiding Data with Deep Networks. In: Proceedings of the European Conference on Computer Vision (ECCV). 2018. p. 657-672;
Matthew Tancik, Ben Mildenhall, Ren Ng Invisible Hyperlinks in Physical Photographs; Proceedings of the IEEE/CVF Conference on Computer Vision and Pattern Recognition (CVPR), 2020, pp. 2117-2126;
Zhang, R., Isola, P., Efros, A. A., Shechtman, E., & Wang, O. (2018). The Unreasonable Effectiveness of Deep Features as a Perceptual Metric. In Proceedings of the IEEE Conference on Computer Vision and Pattern Recognition (pp. 586-595);
Florian Schroff, Dmitry Kalenichenko, James Philbin; FaceNet: A Unified Embedding for Face Recognition and Clustering; Proceedings of the IEEE Conference on Computer Vision and Pattern Recognition (CVPR), 2015, pp. 815-823.

## Claims

1. An encoding system for a security document with a printer-proof steganography-encoded image (1) comprising:
a binary error correction and redundancy introduction encoding module (9), which is configured to convert a secret message (8) into a binary message to be encoded (10); and
a first facial detection, alignment, cropping, and resizing module (12), which is configured to process and select a partial image to be encoded (13) from an entire image to be encoded (11); and
a coding module (14), which is configured to encode the binary message to be encoded (10) in the partial image to be encoded (13), resulting in an encoded partial image (15); and
an image integration module (16), which is configured to integrate an encoded partial image (15) into the entire image to be encoded (11), resulting in an encoded entire image (17);
wherein the encoding system for a security document with a printer-proof steganography-encoded image (1) is trained by a training subsystem that includes a generative adversarial neural network (3), wherein
said generative adversarial neural network (3) comprises a generator generative adversarial neural network (6) and a discriminative generative adversarial neural network (7); wherein
the generator generative adversarial neural network (6) is configured to process a training secret message (39) and a training image (40) through a training encoding module (41), a physical transmission noise simulation module (18), a captured image resizing module (25) and a training decoding module (42), resulting in an artificial image with a training encoded message (43); and the discriminative generative adversarial neural network (7) being configured to process the artificial image with a training encoded message (43) through a facial detection, alignment and cropping training module (44) and a loss function calculation module (45), resulting in a retrieved secret message (46); wherein
training of the training encoding module (41) and of the training decoding module (42) is performed through a plurality of processing steps for training secret messages (39) and training images (40), generating retrieved secret messages (46) until the loss function calculation module (45) calculates the efficiency as satisfactory in the retrieval of the secret message; and
wherein the coding module (14) is based on the training encoding module (41) and the first facial detection alignment, cropping, and resizing module (12) is based on the facial detection, alignment and cropping training module (44).

2. The encoding system for a security document with a printer-proof steganography-encoded image (1), according to the previous claim, **characterized in that** it comprises a physical transmission module (20) for an encoded entire image (17) for a security document with a printer-proof steganography-encoded image (21).

3. The encoding system for a security document with a printer-proof steganography-encoded image (1), according to any one of the previous claims, **characterized in that** the entire image to be encoded (11) is a facial portrait and the security document with a printer-proof steganography-encoded image (21) is selected from the group consisting of a personal identification document and a personal machine-readable travel document.

4. A decoding and integrity validation system for a security document with a printer-proof steganography-encoded image (2), wherein the system is integrated with the encoding system for a security document with a printer-proof steganography-encoded image (1), as defined in any one of the previous Claims, and.comprises:
a decoding subsystem (4), which includes a second facial detection, alignment, cropping, and resizing module (27), a decoding module (29) and a binary error correction module with redundancy (31); and
an integrity validation subsystem (5), which includes the decoded message validation module (33) and a security document integrity validation module (36);
wherein the second facial detection, alignment, cropping, and resizing module (27) is configured for processing and selecting a partial image to be validated (28) from an entire image to be validated (26);
wherein the decoding module (29) is configured for decoding a partial image to be validated (28), resulting in a binary message to be validated (30);
wherein the binary error correction module with redundancy (31) is configured for converting the binary message to be validated (30) in a decoded message to be validated (32);
wherein the decoded message validation module (33) is configured for analyzing whether the decoded message to be validated (32) is correct and conclusive;
wherein the security document integrity validation module (36) is configured for analyzing whether a correct secret message (34) confers authenticity on the security document to be validated (22); wherein
the security document integrity validation module (36) is configured to provide a binary response on the integrity of the document: a positive decision on security document authenticity (37) or a negative decision on security document authenticity (38); wherein the security document is considered authentic if the correct secret message (34) is validated and equal to an expected secret message; and
wherein the decoding module (29) is based on the training decoding module (42) and the second facial detection, alignment, cropping and resizing module (27) is based on the facial detection, alignment and cropping training module (44).

5. The decoding and integrity validation system for a security document with a printer-proof steganography-encoded image (2), according to the previous claim, **characterized in that** the decoding module (29) includes at least a special transformation network and at least a convolutional neural network.

6. The decoding and integrity validation system for a security document with a printer-proof steganography-encoded image (2), according to any one of claims 4 and 5, **characterized in that** it includes a digital capture module for an entire image included in a security document to be validated (23), which is configured to capture a captured entire image to be validated (24) from a security image included in the security document to be validated (22).

7. The decoding and integrity validation system for a security document with a printer-proof steganography-encoded image (2), according to any one of claims 4 to 6, **characterized in that** a captured entire image to be validated (24) is a facial portrait and the security document to be validated (22) to be selected from the group consisting of a personal identification document and a personal machine-readable travel document.

8. A computer-implemented method for encoding a security document with a printer-proof steganography-encoded image, wherein the method is run by the encoding system for a security document with a printer-proof steganography-encoded image (1), as defined in any one of Claims 1 to 3, and comprises the following steps:
a) Converting a secret message (8) in a binary message to be encoded (10) through the binary error correction and redundancy introduction encoding module (9);
b) Processing and selecting a partial image to be encoded (13) from an entire image to be encoded (11) through the first facial detection, alignment, cropping, and resizing module (12);
c) Encoding the binary message to be encoded (10) in the partial image to be encoded (13) through the coding module (14), resulting in an encoded partial image (15);
d) Integrating the encoded partial image (15) into the entire image to be encoded (11) through the image integration module (16), resulting in an encoded entire image (17).

9. The computer-implemented method for encoding a security document with a printer-proof steganography-encoded image, according to claim 8, **characterized in that** it includes a subsequent additional step, which includes the physical transmission of the encoded entire image (17) to a security document with a printer-proof steganography-encoded image (21), with this step performed by the physical transmission module for an encoded entire image (20).

10. The computer-implemented method for encoding a security document with a printer-proof steganography-encoded image, according to any one of claims 8 and 9, **characterized in that** the entire image to be encoded (11) is a facial portrait and the security document with a printer-proof steganography-encoded image (21) is selected from the group consisting of a personal identification document and a personal machine-readable travel document.

11. A computer-implemented method for decoding and integrity validation of a security document with a printer-proof steganography-encoded image, wherein the method is run by the decoding and integrity validation system for a security document with a printer-proof steganography-encoded image (2), as defined in any one of Claims 4 to 7, and comprises the following steps:
a) Processing and selecting an entire image to be validated (26) through the second facial detection, alignment, cropping, and resizing module (27), resulting in a partial image to be validated (28);
b) Decoding the partial image to be validated (28) through the decoding module (29), resulting in a binary message to be validated (30);
c) Converting the binary message to be validated (30) in a decoded message to be validated (32) through the binary error correction module with redundancy (31);
d) Analysis of the decoded message to be validated (32) by the decoded message validation module (33), resulting the decision of whether the decoded message to be validated (32) is the correct secret message (34) or the incorrect secret message (35);
e) Analysis of the correct secret message (34) by the security document integrity validation module (36), resulting in a decision on whether the security document to be validated (22) is genuine; wherein
the security document integrity validation module (36) provides a binary response on the integrity of the document: a positive decision on security document authenticity (37) or a negative decision on security document authenticity (38); wherein
the security document is considered genuine if the correct secret message (34) is validated and equal to an expected secret message.

12. The computer-implemented method for decoding and integrity validation of a security document with a printer-proof steganography-encoded image, according to the previous claim, **characterized in that** the decoding module (29) runs through at least a special transformation network and at least a convolutional neural network.

13. The computer-implemented method for decoding and integrity validation of a security document with a printer-proof steganography-encoded image, according to any one of claims 11 and 12, **characterized in that** the captured entire image to be validated (24) is obtained through the capture of a security image included in the security document to be validated (22) through a digital capture module of an entire image included in at least the security document to be validated (23).

14. The computer-implemented method for decoding and integrity validation of a security document with a printer-proof steganography-encoded image, according to any one of claims 11 to 13, **characterized in that** the captured entire image to be validated (24) is a facial portrait and the security document to be validated (22) is selected from the group consisting of a personal identification document and a personal machine-readable travel document.

15. A security document with a printer-proof steganography-encoded image (21), **characterized in that** it comprises at least one encoded entire image (17) transmitted physically on a physical support or on an electronic support, and is prepared through the method defined in any one of Claims 8 to 10.

16. The security document with a printer-proof steganography-encoded image (21), according to the previous claim, **characterized in that** the encoded entire image (17) is a facial portrait and the security document with a printer-proof steganography-encoded image (21) is selected from the group consisting of a personal identification document and a personal machine-readable travel document.

17. A computing device, **characterized in that** it comprises means adapted to execute the steps of the method defined in any one of claims 8 to 10.

18. A computing device, **characterized in that** it comprises means adapted to execute the steps of the method defined in any one of claims 11 to 14.

19. A computer program, **characterized in that** it comprises instructions which, when the computer program is executed by a computing device, as defined in claim 17, cause the computing device to execute the steps of the method defined in any one of claims 8 to 10.

20. A computer program, **characterized in that** it comprises instructions which, when the computer program is executed by a computing device, as defined in claim 18, cause the computing device to execute the steps of the method defined in any one of claims 11 to 14.

21. A computer-readable data carrier **characterized by** having stored thereon the computer program, as defined in claim 19.

22. A computer-readable data carrier **characterized by** having stored thereon the computer program, as defined in claim 20.

## Patentansprüche

1. Ein Codierungssystem für ein Sicherheitsdokument mit einem druckersicheren, steganographisch kodierten Bild (1), das Folgendes umfasst:
Ein Codierungsmodul (9) zur binären Fehlerkorrektur und Redundanzeinführung, das dazu konfiguriert ist, um eine geheime Nachricht (8) in eine zu kodierende binäre Nachricht (10) umzuwandeln, und
ein erstes Gesichtserkennungs-, Ausrichtungs-, Beschneide- und Größenänderungsmodul (12), das konfiguriert ist, um ein zu kodierendes Teilbild (13) aus einem gesamten zu kodierenden Bild (11) auszuwählen und zu verarbeiten, und
Ein Codierungsmodul (14), das so konfiguriert ist, dass die zu kodierende binäre Nachricht (10) im zu kodierenden Teilbild (13) kodiert wird, was zu einem kodierten Teilbild (15) führt, und
Ein Bildintegrationsmodul (16), das so konfiguriert ist, um ein kodiertes Teilbild (15) in das gesamte zu kodierende Bild (11) zu integrieren, was zu einem kodierten Gesamtbild (17) führt,
wobei das Codierungssystem für ein Sicherheitsdokument mit einem druckersicheren, steganographisch kodierten Bild (1) durch ein Trainingssubsystem trainiert wird, das ein generatives kontradiktorisches neuronales Netzwerk (3) umfasst, wobei das generative kontradiktorische neuronale Netzwerk (3) ein generatives kontradiktorisches neuronales Generatornetzwerk (6) und ein diskriminatives generatives kontradiktorisches neuronales Netzwerk (7) umfasst, wobei
das generative kontradiktorische neuronale Generatornetzwerk (6) so konfiguriert, ist dass es eine geheime Trainingsnachricht (39) und ein Trainingsbild (40) über ein Trainingscodierungsmodul (41), ein Modul zur Simulation physikalischer Übertragungsstörungen (18), ein Modul zur Größenänderung des aufgenommenen Bildes (25) und ein Trainingsdecodierungsmodul (42) verarbeitet, was zu einem künstlichen Bild mit einer trainingscodierten Nachricht (43) führt, und das diskriminative generative kontradiktorische neuronale Netzwerk (7) so konfiguriert ist, dass es das künstliche Bild mit einer trainingscodierten Nachricht (43) über ein Trainingsmodul (44) zur Gesichtserkennung, -ausrichtung und -zuschnitt und ein Modul (45) zur Berechnung der Verlustfunktion verarbeitet, was zu einer abgerufenen geheimen Nachricht (46) führt, wobei das Training des Trainingskodierungsmoduls (41) und des Trainingsdekodierungsmoduls (42) durch eine Vielzahl von Verarbeitungsschritten zum Trainieren geheimer Nachrichten (39) und Trainingsbilder (40) durchgeführt wird, wobei abgerufene geheime Nachrichten (46) erzeugt werden, bis das Verlustfunktionsberechnungsmodul (45) die Effizienz beim Abrufen der geheimen Nachricht als zufriedenstellend berechnet und wobei das Codierungsmodul (14) auf dem Trainingscodierungsmodul (41) basiert und das erste Gesichtserkennungs-, Ausrichtungs-, Beschneide- und Größenänderungsmodul (12), auf dem Gesichtserkennungs-, Ausrichtungs- und Beschneide-Trainingsmodul (44) basiert.

2. Das Codierungssystem für ein Sicherheitsdokument mit einem druckersicheren, steganographisch kodierten Bild (1) gemäß dem vorhergehenden Anspruch, **dadurch gekennzeichnet, dass** es ein physikalisches Übertragungsmodul (20) für ein kodiertes Gesamtbild (17) für ein Sicherheitsdokument mit einem druckersicheren, steganographisch verschlüsselten Bild (21) umfasst.

3. Das Codierungssystem für ein Sicherheitsdokument mit einem druckersicheren, steganographisch kodierten Bild (1), gemäß einem der vorhergehenden Ansprüche, **dadurch gekennzeichnet, dass** das gesamte zu kodierende Bild (11) ein Gesichtsporträt ist und das Sicherheitsdokument mit einem druckersicheren, steganographisch kodierten Bild (21) aus der Gruppe ausgewählt wird, die aus einem persönlichen Ausweisdokument und einem persönlichen maschinenlesbaren Reisedokument besteht.

4. Ein Dekodierungs- und Integritätsvalidierungssystem für ein Sicherheitsdokument mit einem druckersicheren, steganographisch kodierten Bild (2), wobei das System in das Codierungssystem für ein Sicherheitsdokument mit einem druckersicheren, steganographisch kodierten Bild (1) integriert ist, wie in einem der vorhergehenden Ansprüche definiert, und Folgendes umfasst:
ein Dekodierungssubsystem (4), das ein zweites Gesichtserkennungs-, Ausrichtungs-, Beschneide- und Größenänderungsmodul (27), ein Dekodierungsmodul (29) und ein binäres Fehlerkorrekturmodul mit Redundanz (31) umfasst, und
ein Integritätsvalidierungssubsystem (5), das das Validierungsmodul für dekodierte Nachrichten (33) und ein Validierungsmodul für die Integrität von Sicherheitsdokumenten (36) umfasst,
wobei das zweite Gesichtserkennungs-, Ausrichtungs-, Beschneide- und Größenänderungsmodul (27) für die Verarbeitung und Auswahl eines zu validierenden Teilbildes (28) aus einem zu validierenden Gesamtbild (26) konfiguriert ist,
wobei das Dekodierungsmodul (29) für die Decodierung eines zu validierenden Teilbildes (28) konfiguriert ist, was zu einer zu validierenden binären Nachricht (30) führt,
wobei das binäre Fehlerkorrekturmodul mit Redundanz (31) für die Konvertierung der zu validierenden binären Nachricht (30) in eine zu validierende decodierte Nachricht (32) konfiguriert ist,
wobei das Validierungsmodul für dekodierte Nachrichten (33) konfiguriert ist, um zu analysieren, ob die zu validierende dekodierte Nachricht (32) korrekt und schlüssig ist,
wobei das Validierungsmodul (36) für die Integrität von Sicherheitsdokumenten konfiguriert ist, um zu analysieren, ob eine korrekte geheime Nachricht (34) dem zu validierenden Sicherheitsdokument (22) Authentizität verleiht, wobei
das Validierungsmodul (36) für die Integrität von Sicherheitsdokumenten so konfiguriert ist, um eine binäre Antwort über die Integrität des Dokuments zu liefern: Eine positive Entscheidung über die Echtheit des Sicherheitsdokuments (37) oder eine negative Entscheidung über die Echtheit des Sicherheitsdokuments (38), wobei
das Sicherheitsdokument als authentisch gilt, wenn die richtige geheime Nachricht (34) validiert ist und einer erwarteten geheimen Nachricht entspricht, und wobei das Dekodierungsmodul (29) auf dem Trainingsdekodierungsmodul (42) basiert und das zweite Gesichtserkennungs-, Ausrichtungs-, Beschneide- und Größenänderungsmodul (27) auf dem auf dem Gesichtserkennungs-, Ausrichtungs- und Beschneide-Trainingsmodul (44) basiert.

5. Das Dekodierungs- und Integritätsvalidierungssystem für ein Sicherheitsdokument mit einem druckersicheren, steganographisch kodierten Bild (2) gemäß dem vorhergehenden Anspruch, **dadurch gekennzeichnet, dass** das Dekodierungsmodul (29) mindestens ein spezielles Transformationsnetzwerk und mindestens ein konvolutionales neuronales Netzwerk umfasst.

6. Das Dekodierungs- und Integritätsvalidierungssystem für ein Sicherheitsdokument mit einem druckersicheren, steganographisch kodierten Bild (2) gemäß einem der Ansprüche 4 und 5, **dadurch gekennzeichnet, dass** es ein digitales Erfassungsmodul für ein gesamtes Bild enthält, das in einem zu validierenden Sicherheitsdokument (23) enthalten ist, das konfiguriert ist, um ein erfasstes zu validierendes Gesamtbild (24) aus einem Sicherheitsbild zu erfassen, das in dem zu validierenden Sicherheitsdokument (22) enthalten ist.

7. Das Dekodierungs- und Integritätsvalidierungssystem für ein Sicherheitsdokument mit einem druckersicheren, steganographisch kodierten Bild (2) gemäß einem der Ansprüche 4 bis 6, **dadurch gekennzeichnet, dass** ein aufgenommenes Gesamtbild, das validiert werden soll (24), ein Gesichtsporträt ist und das zu validierende Sicherheitsdokument (22) aus der Gruppe ausgewählt werden soll, die aus einem persönlichen Ausweisdokument und einem persönlichen maschinenlesbaren Reisedokument besteht.

8. Ein computerimplementiertes Verfahren zur Kodierung eines Sicherheitsdokuments mit einem druckersicheren, steganographisch kodierten Bild, wobei das Verfahren vom Codierungssystem für ein Sicherheitsdokument mit einem druckersicheren, steganographisch kodierten Bild (1) gemäß einem der Ansprüche 1 bis 3 ausgeführt wird und die folgenden Schritte umfasst:
a) Konvertieren einer geheimen Nachricht (8) in eine zu codierende binäre Nachricht (10) durch das Codierungsmodul (9) zur binären Fehlerkorrektur und Redundanzeinführung;
b) Verarbeitung und Auswahl eines zu kodierenden Teilbilds (13) aus einem zu kodierenden Gesamtbild (11) durch das erste Gesichtserkennungs-, Ausrichtungs-, Beschneide- und Größenänderungsmodul (12);
c) Kodieren der zu kodierenden binären Nachricht (10) in dem zu kodierenden Teilbild (13) durch das Codierungsmodul (14), wodurch ein kodiertes Teilbild (15) entsteht;
d) Integrieren des codierten Teilbildes (15) in das gesamte zu kodierende Bild (11) durch das Bildintegrationsmodul (16), was zu einem kodierten Gesamtbild (17) führt.

9. Das computerimplementierte Verfahren zur Kodierung eines Sicherheitsdokuments mit einem druckersicheren, steganographisch kodierten Bild, gemäß Anspruch 8, **dadurch gekennzeichnet, dass** es einen nachfolgenden zusätzlichen Schritt umfasst, der die physikalische Übertragung des kodierten Gesamtbildes (17) auf ein Sicherheitsdokument mit einem druckersicheren, steganographisch kodierten Bild (21) umfasst, wobei dieser Schritt vom physikalischen Übertragungsmodul für ein kodiertes Gesamtbild (20) ausgeführt wird.

10. Das computerimplementierte Verfahren zur Kodierung eines Sicherheitsdokuments mit einem druckersicheren, steganographisch kodierten Bild gemäß einem der Ansprüche 8 und 9, **dadurch gekennzeichnet, dass** das gesamte zu kodierende Bild (11) ein Gesichtsporträt ist und das Sicherheitsdokument mit einem druckersicheren, steganographisch kodierten Bild (21) aus der Gruppe ausgewählt wird, die aus einem persönlichen Ausweisdokument und einem persönlichen maschinenlesbaren Reisedokument besteht.

11. Ein computerimplementiertes Verfahren zur Dekodierung und Integritätsvalidierung eines Sicherheitsdokuments mit einem druckersicheren, steganographisch kodierten Bild, wobei das Verfahren vom Dekodierungs- und Integritätsvalidierungssystem für ein Sicherheitsdokument mit einem druckersicheren, steganographisch kodierten Bild (2) gemäß einem der Ansprüche 4 bis 7 ausgeführt wird und die folgenden Schritte umfasst:
a) Verarbeitung und Auswahl eines zu validierenden Gesamtbildes (26) durch das zweite Gesichtserkennungs-, Ausrichtungs-, Beschneide- und Größenänderungsmodul (27), was zu einem zu validierenden Teilbild führt (28);
b) Dekodierung des zu validierenden Teilbildes (28) über das Dekodierungsmodul (29), was zu einer zu validierenden binären Nachricht führt (30);
c) Konvertieren der zu validierenden binären Nachricht (30) in eine zu validierende decodierte Nachricht (32) über das binäre Fehlerkorrekturmodul mit Redundanz (31);
d) Analyse der zu validierenden dekodierten Nachricht (32) durch das Validierungsmodul (33) für dekodierte Nachrichten, was zu der Entscheidung führt, ob es sich bei der zu validierenden dekodierten Nachricht (32) um die richtige geheime Nachricht (34) oder die falsche geheime Nachricht (35) handelt;
e) Analyse der korrekten geheimen Nachricht (34) durch das Validierungsmodul für die Integrität von Sicherheitsdokumenten (36), was zu einer Entscheidung darüber führt, ob das zu validierende Sicherheitsdokument (22) echt ist; wobei
Das Validierungsmodul für die Integrität von Sicherheitsdokumenten (36) liefert eine binäre Antwort über die Integrität des Dokuments: Eine positive Entscheidung über die Authentizität von Sicherheitsdokumenten (37) oder eine negative Entscheidung über die Authentizität von Sicherheitsdokumenten (38), wobei
das Sicherheitsdokument als echt gilt, wenn die korrekte geheime Nachricht (34) validiert wurde und einer erwarteten geheimen Nachricht entspricht.

12. Das computerimplementierte Verfahren zur Dekodierung und Integritätsvalidierung eines Sicherheitsdokuments mit einem druckersicheren, steganographisch kodierten Bild gemäß dem vorhergehenden Anspruch, **dadurch gekennzeichnet, dass** das Dekodierungsmodul (29) mindestens ein spezielles Transformationsnetzwerk und mindestens ein konvolutionales neuronales Netzwerk durchläuft.

13. Das computerimplementierte Verfahren zur Dekodierung und Integritätsvalidierung eines Sicherheitsdokuments mit einem druckersicheren, steganographisch kodierten Bild, gemäß einem der Ansprüche 11 und 12, **dadurch gekennzeichnet, dass** das erfasste zu validierende Gesamtbild (24) durch die Erfassung eines im zu validierenden Sicherheitsdokument (22) enthaltenen Sicherheitsbildes durch ein digitales Erfassungsmodul eines gesamten Bildes erhalten wird, das zumindest in dem zu validierenden Sicherheitsdokument enthalten ist (23).

14. Das computerimplementierte Verfahren zur Dekodierung und Integritätsvalidierung eines Sicherheitsdokuments mit einem druckersicheren, steganographisch kodierten Bild gemäß einem der Ansprüche 11 bis 13, **dadurch gekennzeichnet, dass** das erfasste zu validierende Gesamtbild (24) ein Gesichtsporträt ist und das zu validierende Sicherheitsdokument (22) aus der Gruppe ausgewählt wird, die aus einem persönlichen Ausweisdokument und einem persönlichen maschinenlesbaren Reisedokument besteht.

15. Ein Sicherheitsdokument mit einem druckersicheren, steganographisch kodierten Bild (21), **dadurch gekennzeichnet, dass** es mindestens ein kodiertes Gesamtbild (17) umfasst, das physisch auf einen physischen Träger oder auf einem elektronischen Träger übertragen wird, und durch das in einem der Ansprüche 8 bis 10 definierten Verfahren hergestellt wird.

16. Das Sicherheitsdokument mit einem druckersicheren, steganographisch kodierten Bild (21) gemäß dem vorhergehenden Anspruch, **dadurch gekennzeichnet, dass** das kodierte Gesamtbild (17) ein Gesichtsporträt ist und das Sicherheitsdokument mit einem druckersicheren, steganographisch kodierten Bild (21) aus der Gruppe ausgewählt wird, die aus einem persönlichen Ausweisdokument und einem persönlichen maschinenlesbaren Reisedokument besteht.

17. Ein Computergerät, **dadurch gekennzeichnet, dass** es Mittel umfasst, die dazu geeignet sind, die Schritte des in einem der Ansprüche 8 bis 10 definierten Verfahrens auszuführen.

18. Ein Computergerät, **dadurch gekennzeichnet, dass** es Mittel umfasst, die dazu geeignet sind, die Schritte des in einem der Ansprüche 11 bis 14 definierten Verfahrens auszuführen.

19. Ein Computerprogramm, **dadurch gekennzeichnet, dass** es Anweisungen umfasst, die das Computergerät veranlassen, die Schritte des in einem der Ansprüche 8 bis 10 definierten Verfahrens auszuführen, wenn das Computerprogramm von einem Computergerät gemäß Anspruch 17 ausgeführt wird.

20. Ein Computerprogramm, **dadurch gekennzeichnet, dass** es Anweisungen umfasst, die das Computergerät veranlassen, die Schritte des in einem der Ansprüche 11 bis 14 definierten Verfahrens auszuführen, wenn das Computerprogramm von einem Computergerät gemäß Anspruch 18 ausgeführt wird.

21. Ein computerlesbarer Datenträger, **dadurch gekennzeichnet, dass** darauf das in Anspruch 19 definierte Computerprogramm gespeichert ist.

22. Ein computerlesbarer Datenträger, **dadurch gekennzeichnet, dass** darauf das in Anspruch 20 definierte Computerprogramm gespeichert ist.

## Revendications

1. Système de codage pour un document de sécurité avec une image codée par stéganographie (1) résistante à l'impression, comprenant :
un module de codage à correction d'erreurs binaires et introduction de redondance (9), qui est configuré pour convertir un message secret (8) en un message binaire à coder (10) ; et
un premier module de détection, d'alignement, de recadrage et de redimensionnement de visage (12), qui est configuré pour traiter et sélectionner une image partielle à coder (13) à partir d'une image entière à coder (11); et
un module de codage (14), qui est configuré pour coder le message binaire à coder (10) dans l'image partielle à coder (13), ce qui donne une image partielle codée (15) ; et
un module d'intégration d'image (16), qui est configuré pour intégrer une image partielle codée (15) dans l'image entière à coder (11), ce qui donne une image entière codée (17) ;
dans lequel le système de codage pour un document de sécurité avec une image codée par stéganographie résistante à l'imprimante (1) est entraîné par un sous-système d'entraînement qui inclut un réseau neuronal antagoniste génératif (3), dans lequel ledit réseau neuronal antagoniste génératif (3) comprend un réseau neuronal antagoniste génératif générateur (6) et un réseau neuronal antagoniste génératif discriminatif (7) ; dans lequel
le réseau neuronal antagoniste génératif générateur (6) est configuré pour traiter un message secret d'entraînement (39) et une image d'entraînement (40) à travers un module de codage d'entraînement (41), un module de simulation de bruit de transmission physique (18), un module de redimensionnement d'image capturée (25) et un module de décodage d'entraînent (42), ce qui donne une image artificielle avec un message codé d'entraînement (43) ; et le réseau neuronal antagoniste génératif discriminatif (7) étant configuré pour traiter l'image artificielle avec un message codé d'entraînement (43) à travers d'un module d'entraînement de détection, d'alignement et de recadrage faciaux (44) et d'un module de calcul de fonction de perte (45), ce qui donne un message secret récupéré (46) ; dans lequel l'apprentissage du module de codage d'apprentissage (41) et du module de décodage d'apprentissage (42) est effectué à travers une pluralité d'étapes de traitement pour l'apprentissage de messages secrets (39) et d'images d'apprentissage (40), générant des messages secrets récupérés (46) jusqu'à ce que le module de calcul de fonction de perte (45) calcule l'efficacité comme satisfaisante dans la récupération du message secret ; et dans lequel le module de codage (14) est basé sur le module de codage d'apprentissage (41) et le premier module d'alignement, de recadrage et de redimensionnement de détection faciale (12) est basé sur le module d'apprentissage de détection, d'alignement et de recadrage faciale (44).

2. Le système de codage pour un document de sécurité avec une image codée par stéganographie résistante à l'imprimante (1), selon la revendication précédente, **caractérisé en ce qu'il** comprend un module de transmission physique (20) pour une image entière codée (17) pour un document de sécurité avec une image codée par stéganographie résistante à l'imprimante (21).

3. Le système de codage pour un document de sécurité avec une image codée par stéganographie résistante à l'imprimante (1), selon l'une quelconque des revendications précédentes, **caractérisé en ce que** l'image entière à coder (11) est un portrait facial et le document de sécurité avec une image codée par stéganographie résistante à l'imprimante (21) est sélectionné parmi le groupe comprenant un document d'identification personnel et un document de voyage personnel lisible par machine.

4. Le système de décodage et de validation de l'intégrité pour un document de sécurité avec une image codée par stéganographie résistante à l'impression (2), dans lequel le système est intégré au système de codage pour un document de sécurité avec une image codée par stéganographie résistante à l'impression (1), tel que défini dans l'une quelconque des revendications précédentes, et comprend :
un sous-système de décodage (4), qui inclut un second module de détection faciale, d'alignement, de recadrage et de redimensionnement (27), un module de décodage (29) et un module de correction d'erreurs binaires avec redondance (31) ; et un sous-système de validation d'intégrité (5), qui comprend le module de validation de message décodé (33) et un module de validation d'intégrité de document de sécurité (36) ;
dans lequel le deuxième module de détection, d'alignement, de recadrage et de redimensionnement du visage (27) est configuré pour traiter et sélectionner une image partielle à valider (28) à partir d'une image entière à valider (26) ;
dans lequel le module de décodage (29) est configuré pour décoder une image partielle à valider (28), ce qui donne un message binaire à valider (30) ;
dans lequel le module de correction d'erreurs binaires avec redondance (31) est configuré pour convertir le message binaire à valider (30) en un message décodé à valider (32) ;
dans lequel le module de validation de message décodé (33) est configuré pour analyser si le message décodé à valider (32) est correct et concluant ;
dans lequel le module de validation de l'intégrité du document de sécurité (36) est configuré pour analyser si un message secret correct (34) confère l'authenticité au document de sécurité à valider (22) ; dans lequel
le module de validation de l'intégrité du document de sécurité (36) est configuré pour fournir une réponse binaire sur l'intégrité du document : une décision positive sur l'authenticité du document de sécurité (37) ou une décision négative sur l'authenticité du document de sécurité (38) ; dans lequel le document de sécurité est considéré comme authentique si le message secret correct (34) est validé et égal à un message secret attendu ; et dans lequel le module de décodage (29) est basé sur le module de décodage d'apprentissage (42) et le deuxième module d'alignement, de recadrage et de redimensionnement de détection faciale (27) est basé sur le module d'apprentissage de détection, d'alignement et de recadrage faciale (44).

5. Le système de décodage et de validation de l'intégrité d'un document de sécurité avec une image codée par stéganographie résistante à l'imprimante (2), selon la revendication précédente, **caractérisé en ce que** le module de décodage (29) inclut au moins un réseau de transformation spécial et au moins un réseau neuronal convolutif.

6. Système de décodage et de validation d'intégrité pour un document de sécurité avec une image codée par stéganographie résistante à l'imprimante (2), selon l'une quelconque des revendications 4 et 5, **caractérisé en ce qu'il** inclut un module de capture numérique pour une image entière incluse dans un document de sécurité à valider (23), qui est configuré pour capturer une image entière capturée à valider (24) à partir d'une image de sécurité incluse dans le document de sécurité à valider (22).

7. Système de décodage et de validation de l'intégrité d'un document de sécurité avec une image codée par stéganographie résistante à l'imprimante (2), selon l'une quelconque des revendications 4 à 6, **caractérisé en ce que** l'image entière capturée à valider 24) est un portrait facial et le document de sécurité à valider (22) est choisi parmi le groupe comprenant un document d'identification personnel et un document de voyage personnel lisible par machine.

8. Le procédé mis en œuvre par ordinateur pour coder un document de sécurité avec une image codée par stéganographie résistante à l'impression, dans lequel le procédé est exécuté par le système de codage pour un document de sécurité avec une image codée par stéganographie résistante à l'impression (1), tel que défini selon l'une quelconque des revendications 1 à 3, et comprend les étapes suivantes :
a) Convertir un message secret (8) en un message binaire à coder (10) à travers du module de codage par correction d'erreurs binaires et introduction de redondance (9) ;
b) Traiter et sélectionner une image partielle à coder (13) à partir d'une image entière à coder (11) à travers du premier module de détection faciale, d'alignement, de recadrage et de redimensionnement (12) ;
c) Coder le message binaire à coder (10) dans l'image partielle à coder (13) à travers du module de codage (14), ce qui donne une image partielle codée (15) ;
d Intégrer l'image partielle codée (15) dans l'image entière à coder (11) à travers du module d'intégration d'image (16), ce qui donne une image entière codée (17).

9. Le procédé mis en œuvre par ordinateur pour coder un document de sécurité avec une image codée par stéganographie résistante à l'imprimante, selon la revendication 8, **caractérisé en ce qu'il** inclut une étape supplémentaire ultérieure, qui inclut la transmission physique de l'image entière codée (17) vers un document de sécurité avec une image codée par stéganographie résistante à l'imprimante (21), cette étape étant effectuée par le module de transmission physique pour une image entière codée (20).

10. Le procédé mis en œuvre par ordinateur pour coder un document de sécurité avec une image codée par stéganographie résistante à l'imprimante, selon l'une quelconque des revendications 8 et 9, **caractérisé en ce que** l'image entière à coder (11) est un portrait facial et le document de sécurité avec une image codée par stéganographie résistante à l'imprimante (21) est sélectionné parmi le groupe comprenant un document d'identification personnel et un document de voyage personnel lisible par machine.

11. Le procédé mis en œuvre par ordinateur pour décoder et valider l'intégrité d'un document de sécurité avec une image codée par stéganographie résistante à l'imprimante, dans lequel le procédé est exécuté par le système de décodage et de validation de l'intégrité d'un document de sécurité avec une image codée par stéganographie résistante à l'imprimante (2), tel que défini selon l'une quelconque des revendications 4 à 7, et comprend les étapes suivantes :
a) Traitement et sélection d'une image entière à valider (26) à travers du deuxième module de détection faciale, d'alignement, de recadrage et de redimensionnement (27), ce qui donne une image partielle à valider (28) ;
b) Décodage de l'image partielle à valider (28) à travers du module de décodage (29), ce qui donne un message binaire à valider (30) ;
c) Conversion du message binaire à valider (30) en un message décodé à valider (32) à l'aide du module de correction d'erreurs binaires avec redondance (31) ;
d) Analyse du message décodé à valider (32) par le module de validation de message décodé (33), ce qui aboutit à la décision de déterminer si le message décodé à valider (32) est le message secret correct (34) ou le message secret incorrect (35) ;
e) Analyse du message secret correct (34) par le module de validation de l'intégrité du document de sécurité (36), ce qui donne la décision de déterminer si le document de sécurité à valider (22) est authentique ; dans lequel
le module de validation de l'intégrité du document de sécurité (36) fournit une réponse binaire sur l'intégrité du document : une décision positive sur l'authenticité du document de sécurité (37) ou une décision négative sur l'authenticité du document de sécurité (38) ; dans lequel
le document de sécurité est considéré comme authentique si le message secret correct (34) est validé et égal à un message secret attendu.

12. Le procédé mis en œuvre par ordinateur pour le décodage et la validation de l'intégrité d'un document de sécurité avec une image codée par stéganographie résistante à l'imprimante, selon la revendication précédente, **caractérisé en ce que** le module de décodage (29) passe à travers au moins un réseau de transformation spécial et au moins un réseau neuronal convolutif.

13. Le procédé mis en œuvre par ordinateur pour le décodage et la validation de l'intégrité d'un document de sécurité avec une image codée par stéganographie résistante à l'imprimante, selon l'une quelconque des revendications 11 et 12, **caractérisé en ce que** l'image entière capturée à valider (24) est obtenue par la capture d'une image de sécurité incluse dans le document de sécurité à valide (22) à travers un module de capture numérique d'une image entière incluse dans au moins le document de sécurité à valider (23).

14. Le procédé mis en œuvre par ordinateur pour le décodage et la validation de l'intégrité d'un document de sécurité avec une image codée par stéganographie résistante à l'imprimante, selon l'une quelconque des revendications 11 à 13, **caractérisé en ce que** l'image entière capturée à valider (24) est un portrait facial et le document de sécurité à valider (22) est choisi parmi le groupe comprenant un document d'identification personnel et un document de voyage personnel lisible par machine.

15. Le document de sécurité avec une image codée par stéganographie résistante à l'imprimante (21), **caractérisé en ce qu'il** comprend au moins une image entière codée (17) transmise physiquement sur un support physique ou sur un support électronique, et est préparé selon le procédé défini selon l'une quelconque des revendications 8 à 10.

16. Le document de sécurité avec une image codée par stéganographie résistante à l'impression (21), selon la revendication précédente, **caractérisé en ce que** l'image entière codée (17) est un portrait facial et le document de sécurité avec une image codée par stéganographie résistante à l'impression (21) est sélectionné parmi le groupe comprenant un document d'identification personnel et un document de voyage personnel lisible par machine.

17. Le dispositif informatique, **caractérisé en ce qu'il** comprend des moyens adaptés pour exécuter les étapes du procédé défini selon l'une quelconque des revendications 8 à 10.

18. Le dispositif informatique, **caractérisé en ce qu'il** comprend des moyens adaptés pour exécuter les étapes du procédé défini selon l'une quelconque des revendications 11 à 14.

19. Le programme informatique, **caractérisé en ce qu'il** comprend des instructions qui, lorsque le programme informatique est exécuté par un dispositif informatique, tel que défini dans la revendication 17, amènent le dispositif informatique à exécuter les étapes du procédé défini selon l'une quelconque des revendications 8 à 10.

20. Le programme informatique, **caractérisé en ce qu'il** comprend des instructions qui, lorsque le programme informatique est exécuté par un dispositif informatique, tel que défini dans la revendication 18, amènent le dispositif informatique à exécuter les étapes du procédé défini selon l'une quelconque des revendications 11 à 14.

21. Le support de données lisible par ordinateur **caractérisé en ce qu'il** contient le programme informatique tel que défini selon la revendication 19.

22. Le support de données lisible par ordinateur **caractérisé en ce qu'il** contient le programme informatique tel que défini selon la revendication 20.
